# EUROPEAN PATENT SPECIFICATION

(11) **EP 1 973 981 B1**
(45) Date of publication and mention of the grant of the patent: **09.03.2011**
(21) Application number: 06844810.9
(22) Date of filing: 04.12.2006
(51) Int. Cl.: C09J 123/08, C09J 153/02, C08L 23/08, C08L 23/16, C08L 53/02, C08L 23/06, C08L 51/00

(54) **TIE-LAYER ADHESIVE COMPOSITIONS FOR STYRENE POLYMERS AND ARTICLES**
VERBINDUNGSSCHICHT-KLEBSTOFFZUSAMMENSETZUNGEN FÜR STYROLPOLYMERE UND GEGENSTÄNDE
COMPOSITIONS ADHESIVES DE FIXATION DE COUCHES POUR POLYSTYRENES ET ARTICLES

(30) Priority: 17.01.2006 US 332939
(43) Date of publication of application: 01.10.2008
(73) Proprietor: Equistar Chemicals, LP, Houston TX 77010 (US)
(72) Inventor: BOTROS, Maged, G., West Chester, OH 45069 (US)
(74) Representative: Hoffmann, Peter
(86) International application number: PCT/US2006/046322
(87) International publication number: WO 2007/084216

(56) References cited:
- EP-A1- 0 664 327
- EP-A1- 0 791 640
- JP-A- 3 184 843
- US-A- 4 298 712
- US-B1- 6 184 298
- US-B1- 6 855 432

## Description

### Background of the Invention

**Field of the Invention:** The invention relates to improved tie-layer adhesive blend compositions and their use for coextruded multi-layer films and sheets having one or more styrene polymer layers. The improved adhesive compositions are blends of specific ethylene copolymers and specific styrene triblock copolymers with functionalized polyethylenes and, optionally, ethylene-propylene rubber.

**Description of the Prior Art:** Multi-layer films and sheets are widely used for food packaging applications. Depending on the intended end-use application, the number and arrangement of resin layers and the type of resins employed will vary.

Polyethylene (PE) resins are often included as one of the layers for their food contact and sealing properties. Ethylene-vinyl alcohol (EVOH) copolymers and polyamides (nylons) are widely used as oxygen and flavor barrier layers. Styrene polymers are commonly included as structural layers. Styrene polymers which contain rubber, such as high impact polystyrene (HIPS), are especially useful for this purpose.

A continuing problem within the industry is how to adhere the dissimilar resin layers within such multi-layer constructions. While numerous tie-layer adhesive compositions containing modified, i.e., functionalized, polyolefins are known to effectively adhere to polyolefin and barrier resins, adhesion to styrene resins is problematic.

It would therefore be highly advantageous if adhesive blends which provided superior adhesion to styrene polymers without sacrificing adhesion to other polymer types employed in multi-layer constructions were available. These and other advantages are obtained with the adhesive blend compositions of the invention.

Linear low density polyethylenes (LLDPEs) have been widely used as base resins with a variety of functionalized and non-functionalized components for the formulation of adhesive blends. See, for example, U.S. Patent Nos. 4,087,588; 4,139,485; 4,426,498; 4,440,911; 4,460,646; 4,460,745; 4,472,555; 4,487,885; 4,684,576; 4,906,690; 4,966,810; 5,066,542; 5,277,988 and 5,434,217.

Numerous adhesive formulations containing various styrenic components are also known. Styrene-ethylene/butene-styrenc (SEBS) block copolymers grafted with ethylenically unsaturated carboxylic acid derivatives, preferably maleic anhydride, are disclosed for use in adhesive blends in U.S. Patent No. 5,597,865. Adhesive blends containing grafted "ABA" type block copolymers where A is polystyrene and B can be a polymer of butadiene or isoprene are disclosed in U.S. Patent No. 5,070,143. Adhesive blends containing graft polymerized block copolymers having polystyrene and blocks and aliphatic middle blocks are also disclosed in U.S. Patent No. 5,070,143.

Unmodified styrene homopolymers and copolymers and styrene-elastomer block copolymers are disclosed to be useful adhesive blend components in U.S. Patent No. 5,225,482.

U.S. Patent No. 4,861,676 discloses the use of polystyrene and impact-modified polystyrene with grafted and ungrafted ethylene copolymer and saturated alicyclic hydrocarbon resin modifier. The reference also discloses that styrene-butadiene triblock copolymers may also be used if the amount of styrene in the polymer is not too small. Polymers with styrene contents of 80 to 90 percent are suitable whereas copolymers of about 30 percent are indicated to be unsuitable.

U.S. Patent No. 5,709,953 discloses adhesive compositions comprised of 35-65 weight percent (wt.%) ethylene polymer fraction and 35-65 wt.% styrene/aliphatic/styrene triblock elastomer fraction. The reference discloses that all or a portion of the ethylene polymer fraction can be grafted with an unsaturated carboxylic acid or anhydride. For one embodiment where an ethylene polymer fraction having relative low density is desired, the reference suggests mixing a relatively small amount of high density polyethylene (HDPE) grafted with a significant amount of maleic anhydride (MAH) and a relatively large amount of LLDPE.

While the reference generally discloses adhesive blends for styrene polymers comprised of ethylene polymers, styrene triblock elastomers and maleic anhydride grafts, styrene-butadiene-styrene (SBS) triblock elastomers are indicated to be preferred. Inconsistent results have been observed with adhesive blends of the types disclosed in U.S. Patent No. 5,709,953 formulated using styrene-isoprene-styrene (SIS) triblock polymers, particularly when the ethylene polymer is LLDPE.

EP0664327 discloses an adhesive resin composition comprising an ethylene polymer having a melting point of 70 to 132°C, a density of 0.88 to 0.945 g/cm³ and a melt flow rate (MFR) of 0.05 to 50 g/10 min and/or a modified product thereof with an unsaturated carboxylic acid or its derivative; a tackifier; and a block copolymer containing at least one polymer block mainly composed of a vinyl aromatic hydrocarbon and at least one polymer block mainly composed of a conjugated diene or a hydrogenated product thereof.

US 6184298 discloses adhesive compositions having a modified polyethylene; an unmodified polyethylene of a certain density and a styrene-based elastomer, wherein styrene-based elastomer is present in a weight percentage of 10 to 45 wt. % relative to the total weight of the elastomer plus the modified and unmodified polyethylenes, for use in multilayer composite structures having polypropylene as one substrate and having bonded thereto a polyethylene or a layer wich is made from an ethylene copolymer such as an ethylene/acid copolymer or an ethylene acid ionomer.

There is a continuing need for adhesive compositions which provide improved adhesion to styrene polymer layers in coextruded multi-layer films and sheets comprised of one or more styrenic layers. It would be even more advantageous if adhesive blends derived from LLDPE and SIS which provided superior adhesion to styrenic polymers were available. These and other objectives are realized with the adhesive blends of the present invention which utilize specific LLDPE and SIS components in combination with a functionalized ethylene polymer to achieve unexpectedly high adhesion.

### Summary of the Invention

The invention relates to tie-layer adhesive blend compositions. More specifically, the invention relates to tie-layer adhesives having improved adhesion to styrene polymers. The improved compositions of the invention are comprised of 35 to 75 wt.%, based on the total weight of the composition, ethylene-butene-1 linear low density copolymer; from 0.912 to 0.925 g/cm³ and melt index from 0.5 to 15 g/10 min 15 to 45 wt.%, based on the total weight, styrene-isoprene-styrene triblock copolymer having a styrene content greater than 35 wt.%, melt flow rate greater than 25 g/10 min and containing less than 1 wt.% diblock; and I to 25 wt.%, based on the total weight, polyethylene grafted with an ethylenically unsaturated carboxylic acid or acid derivative.

Particularly useful adhesive blend compositions of the invention are those where the ethylene-butene-1 copolymer has a density from 0.916 to 0.919 g/cm³ and is present in an amount from 45 to 65 wt.%, based on the total weight, the styrene-isoprene-styrene triblock copolymer has a styrene content greater than 40 wt.% and melt flow rate greater than 30 g/10 min and is present in an amount from 20 to 40 wt.%, based on the total weight, and the grafted polyethylene is grafted with 0.5 to 5 wt.% maleic anhydride and is present in an amount from 5 to 17.5 wt.%, based on the total weight. The adhesive blends may also advantageously contain from 1 to 20 wt.% and, most preferably, from 5 to 15 wt.% ethylene-propylene elastomer. Ethylene-propylene rubbers and ethylene-propylene-diene rubbers are particularly useful optional components.

Also disclosed are coextruded multi-layer films and sheets comprising a styrene polymer layer and tie-layer adhesively bonded thereto. The styrene polymer layers are preferably polystyrene, high impact polystyrene and mixtures of polystyrene with high impact polystyrene. The multi-layer films and sheets may further comprise additional layers, e.g., polyolefin and ethylene-vinyl alcohol copolymer layers, wherein the tie-layer is disposed between the styrene polymer layer and the additional layer(s).

### Detailed Description

Improved adhesive blends suitable for use as tie-layers for multi-layer constructions containing one or more styrene polymer layers are provided. In general terms, the adhesive blend compositions are comprised of an ethylene copolymer component, a styrene triblock copolymer component and a graft-modified polyethylene component.

It has now unexpectedly been discovered that significant and unexpected improvement in adhesion to styrenic polymer substrates is obtained by judicious selection of the ethylene copolymer component and styrene triblock copolymer component. More specifically, the invention involves the utilization of a combination of specific LLDPE copolymers and specific styrene-isoprene-styrene (SIS) triblock copolymers, which will be defined in more detail to follow, with a graft-modified ethylene polymer.

The LLDPE component, also referred to herein as the base resin, comprises 35 to 75 wt.% of the adhesive blend composition. More preferably, the LLDPE constitutes 40 to 70 wt.% of the adhesive blend and, in a particularly advantageous embodiment of the invention, the LLDPE base resin is present from 45 to 65 wt.%. All weight percentages provided herein for the adhesive blend components are based on the total weight of the composition.

LLDPE resins utilized for, the invention are copolymers of ethylene and butene-1 obtained using conventional polymerization technology. Comonomer, i.e., butene-1, contents will range from 2.5 to 18 wt.%. The ethylene-butene-1 copolymers have densities from 0.912 to 0.925 g/cm³ and, more preferably, from 0.915 to 0.92 g/cm³. Melt indexes (MIs) range from 0.5 to 15 g/10 min and, more preferably, from 1 to 10 g/10 min. In a particularly useful embodiment of the invention the ethylene-butene-1 copolymer has a MI from 1.5 to 5 g/10 min and density from 0.916 to 0.919 g/cm³. Densities and MIs reported herein for the LLDPE and graft-modified ethylene polymer components are determined in accordance with ASTM Test Procedures D1505 and D1238 (condition 190/2.16), respectively.

To obtain adhesive blends exhibiting markedly superior adhesion to styrenic polymers, specific SIS triblock copolymers are necessarily employed in combination with the above-described ethylene-butene-1 LLDPE copolymers. Specifically, high styrene content/high triblock content SIS copolymers having high melt flow rates (MFRs) are employed.

SIS copolymers employed for the invention have styrene contents greater than 35 wt.% and, more preferably, greater than 40 wt.%. Furthermore, useful SIS copolymers for the invention contain less than 1 wt.% diblock. A further requirement is that the SIS copolymers have MFRs greater than 25 g/10 min and, more preferably, greater than 30 g/10 min. MFRs of the SIS triblock copolymers are determined in accordance with ASTM D1238 (condition 200/5).

The SIS triblock copolymer comprises 15 to 45 wt.% and, more preferably, 20 to 40 wt.% of the adhesive blend composition. Particularly advantageous adhesive blends are obtained using less than 35 wt.% of the SIS component, most preferably from 20 to 34.5 wt.%.

When SIS copolymers having styrene contents, triblock contents and MFRs within the above-prescribed ranges are utilized with the ethylene-butene-1 LLDPE copolymers and a functionalized polyolefin, preferably a maleic anhydride grafted PE resin, adhesion to styrenic polymers can be up to 10 times greater than that obtained using adhesive blend formulations similarly prepared using other LLDPE copolymers and/or other SIS triblock copolymers.

Functionalized polyolefins blended with the above-described LLDPE and SIS components to obtain the improved adhesive blends of the invention are polyethylene resins and, more particularly, ethylene homopolymers and copolymers, grafted with an ethylenically unsaturated carboxylic acid or acid derivative. Mixtures of two or more modified ethylene polymers may be employed for preparation of the adhesive blends. Copolymers of ethylene and C₄₋₈ α-olefins, particularly butene-1, hexene-1 or octene-1, obtained utilizing known polymerization processes, including metallocene and single-site polymerization processes, grafted with maleic anhydride (MAH), are most commonly used.

Grafting is accomplished in accordance with known procedures, generally by heating a mixture of the polyethylene and graft monomer(s) with or without a solvent. Most typically, the grafted products are prepared by melt blending the polyethylene in the substantial absence of a solvent with the grafting monomer in a shear-imparting extruder/reactor. Twin screw extruders such as those marketed by Coperion (formerly Werner-Pfleiderer) under the designations ZSK-53, ZSK-83, ZSK-90 and ZSK-92 are especially useful for carrying out the grafting operation. A free radical generating catalyst, such as organic peroxide, can be employed but is not necessary.

Carboxylic acids and carboxylic acid derivatives utilized as grafting monomers can include compounds such as acrylic acid, maleic acid, fumaric acid, citraconic acid, mesaconic acid, maleic anhydride, 4-methyl cyclohex-4-ene-1,2-dicarboxylic acid or anhydride, bicyclo(2.2.2)oct-5-ene-2,3-dicarboxylic acid or anhydride, bicyclo(2.2.1)hept-5-ene-2,3-dicarboxylic acid or anhydride, tetrahydrophthalic acid or anhydride, methylbicyclo(2.2.1) hept-5-ene-2,3-dicarboxylic acid or anhydride, Acid and acid anhydride derivatives which can be used to graft the polyethylene include dialkyl maleates, dialkyl fumarates, dialkyl itaconates, dialkyl mesaconates, dialkyl citraconates, alkyl crotonates. It may be desirable to use more than one grafting monomer to vary the physical properties of the modified polyolefin product. MAH is a particularly useful grafting monomer.

Modified PEs derived from ethylene homopolymers and ethylene-α-olefin copolymers having densities from 0.905 to 0.965 g/cm³ and grafted with 0.5 to 5 wt.% MAH are most advantageously employed with the LLDPE and SIS components to obtain improved adhesive blend compositions. In one highly useful embodiment, the grafted ethylene polymer is an HDPE resin having a density from 0.945 to 0.965 g/cm³. In another highly useful embodiment, the grafted ethylene copolymer is a LLDPE resin having a density from 0.910 to 0.930 g/cm³. The LLDPE being grafted may be the same as the base resin. Particularly useful adhesive blends are obtained using HDPE and LLDPE resins grafted with 0.75 to 2.5 wt.% maleic anhydride. The MI of the grafted HDPE or LLDPE component will most generally be in the range from 0.5 to 20 g/10 min.

The graft-modified PE component constitutes from 1 up to about 25 wt.% of the adhesive blend. More preferably, the graft-modified PE is present in an amount such that it comprises 2.5 to 20 wt.% of the adhesive blend. In an especially useful embodiment, the graft component comprises 5 to 17.5 wt.% of the blend and is maleic anhydride grafted HDPE or LLDPE.

Depending on the particular resins being bonded, it may be advantageous to include an ethylene-propylene elastomeric component in the adhesive blend. Ethylene-propylene rubbers (EPRs) and/or ethylene-propylene-diene rubbers (EPDMs) are particularly advantageous for this purpose. These elastomers typically contain greater than 50 wt.% ethylene. EPRs or EPDMs containing 60 wt.% or more ethylene are particularly advantageous. Elastomeric products of this type are obtained by conventional polymerization procedures known to the art and include the so-called metallocene rubbers. Illustrative elastomers of the above type obtainable from commercial sources include BUNA EPT 2070 (22 Mooney ML(1+4) 125°C, 69% ethylene), BUNA EPT 2370 (16 Mooney, 3% ethylene norbornene, 72% ethylene), BUNA 2460 (21 Mooney, 4% ethylene norbornene, 62% ethylene), KELTAN EPDM DE244 (Mooney 55, 71 % ethylene, 0.2% ethylene norbornene) and NORDEL IP 3720P (20 Mooney; 69% ethylene; 0.5% ethylene norbornene).

When included in the blend, the elastomeric component can constitute 1 to 20 wt.% of the adhesive composition. EPRs and EPDMs are preferably used in amounts from 3 to 18 wt.% and, most preferably, from 5 to 15 wt.%.

One or more stabilizer additives are also typically included in the blends at levels ranging from 250 to 5000 ppm and, more preferably, from 500 to 3000 ppm, based on the total composition. Any of the conventional additives or additive packages commonly used to stabilize polyolefins against the deleterious effects of oxygen, heat and light, e.g., hindered phenols, can be used.

The adhesive blends of the invention are obtained by physically mixing and melt blending the LLDPE, SIS triblock copolymer and functionalized component plus any optional components or additives by any convenient means. Melt blending using a Banbury mixer or extruder is especially convenient.

Adhesive blend compositions of the invention are useful for the production of composite structures, e.g., films and sheets, wherein a layer of the adhesive is applied to one or more substrate layers by any convenient means, and by coextrusion in particular. Multi-layer composites of particular interest include those comprised of layers of polyolefins such as polyethylene, polar substrates such as EVOH and polyamides with any of a wide variety of styrene polymers, including homopolymers and copolymers. The styrene polymers may be modified by the inclusion of an elastomer. Impact-modified polystyrenes are of particular interest due to their utility as structural layers in multilayer laminate structures.

The present adhesive blends are particularly useful as adhesives for multi-layer laminate coextrusion wherein the styrenic layer is high impact polystyrene (HIPS) or a blend of HIPS and polystyrene wherein the HIPS contains up to about 30 wt.% and, more typically, between 10 and 15 wt.% elastomer. Suitable elastomers for use as impact modifiers for HIPS resins include natural rubber and synthetic rubbers, such as styrene-butadiene rubber, acrylonitrile-butadiene rubber, butyl rubber, chloroprene rubber, silicone rubber, acryl rubber, urethane rubber, polybutadiene rubber, ethylene propylene rubber,. In high impact polystyrene resin compositions, the elastomer exists as a dispersed phase in the styrene polymer.

In a preferred embodiment the multi-layer film or sheet further comprises a polyolefin layer, wherein said tie-layer is disposed between the polyolefin layer and the styrene polymer layer.

The adhesive blends of the invention exhibit excellent adhesion under a variety of conditions to non-polar polyolefins, polar polymers and styrenic substrates. Moreover, the resulting composite structures are easily formed and can be readily die cut after thermoforming. Composite structures of the above types, and particularly those of the structure polyolefinladhesive/EVOH/adhesive/styrene resin, have utility for the fabrication of refrigerator liners and food packaging such as thermoformed cups, flexible sheets, cast or blown films, cast sheets,

Particularly advantageous structures are those wherein the polyolefin is PE, such as HDPE, low density polyethylene (LDPE), medium density polyethylene (MDPE), LLDPE and mixtures thereof, and the styrene resin is polystyrene, HIPS or mixtures of polystyrene and HIPS. Utilizing the adhesive compositions of the invention, formulated by combining and melt blending the above-specified LLDPE, SIS and graft-modified polyethylene components, it is possible to significantly increase adhesion at the styrenic polymer interface. This improved adhesion to styrenic polymers is achieved without sacrificing adhesion to the other polymeric substrates comprising the structure, such as the polyolefin and barrier resin layers.

The following examples illustrate the invention; however, those skilled in the art will recognize numerous variations which are within the spirit of the invention and scope of the claims.

Tie-layer adhesive blend compositions prepared and utilized in the examples were pelletized prior to use. This was accomplished by dry blending all of the components and then melt blending the mixture in a Warner-Pfleiderer ZSK-30 twin screw extruder equipped with a multi-hole (1/8 inch diameter) die connected to a strand cutter. The extruder screw speed was 250 rpm. Temperatures in the extruder ranged from 180°C to 200°C. Melt temperature at the extruder die was 209°C.

To evaluate adhesion of the tie-layer compositions, 24 mil multi-layer cast sheets were prepared by coextrusion. The five-layer coextruded sheets had an A/B/C/B/A layer structure where B represents the tie-layer composition, C represents EVOH and A represents polystyrene layers. The sheets were produced on a Killion laboratory scale film line using three 1 inch extruders in an AB/CB/A feedblock, configuration. Sheets were extruded using a 10 inch flat die to produce continuous 8 inch wide samples.

Adhesion values reported herein were determined in accordance with ASTM D 1876-93. Adhesion values are reported for both tie-layer/styrene interfaces since it was observed that, for the 24 mil cast sheet prepared in this manner, adhesion on the side which contacted the chill roll was consistently higher than adhesion on the side which did not contact the chill roll. An average value is also reported. EVOH/tie-layer adhesion was determined after separation and removal of the styrene polymer layers. Separation at only one EVOH/tie-layer interface was possible due to the thinness of the remaining structure.

### Example 1

A tie-layer adhesive composition of the invention was prepared by melt-blending 59.83 wt.% LLDPE base resin (ethylene-butene-1 copolymer; density 0.918 g/cm³; MI 2 g/10 min), 30 wt.% SIS triblock copolymer (44 wt.% styrene; MI 40 g/10 min; <1% diblock) and 10 wt.% HDPE grafted with 1.9 wt.% maleic anhydride. The adhesive blend also contained 0.17 wt.% of a commercial hindered phenol stabilizer. The adhesive blend was coextruded with styrene and EVOH resins to produce multilayer coextruded sheet having the following construction and weight percentage of each component:

| | | | | |
|---|---|---|---|---|
| 43% | 4% | 6% | 4% | 43% |
| Styrene Polymer | Tie-layer | EVOH | Tie-layer | Styrene polymer |

The EVOH used was a commercial resin obtained from Nippon Gohsei and contained 32 mole percent ethylene. The styrene polymer was a 50:50 mixture of polystyrene and high impact polystyrene (HIPS).

Temperatures in the three heating zones and at the die for each of the three extruders used to coextrude the 5-layer sheet were as follows:
Polystyrene 360°F/405°F/420°F/425°F
EVOH 380°F/380°F/400°F/455°F
Tie-Layer 355°F/400°F/410°F/455°F

Excellent adhesion of the tie-layer to the styrenic polymer layer was obtained. Adhesion test results are set forth in Table 1.

### Comparative Example 2

To demonstrate the superior and unexpected results obtained with the tie-layer adhesive compositions of the invention, a comparative adhesive blend was prepared and evaluated. The tie-layer adhesive formulation was identical to that of Example 1 except that a different LLDPE base resin was employed. For this comparative adhesive blend the LLDPE copolymer used was a commercially available ethylene-hexene-1-copolymer having a density of 0.918 g/cm³ and MI of 7 g/10 min. The other components and the amount of each component were the same as reported in Example 1. Adhesion at the styrenic polymer/tie-layer interface was determined on five-layer sheet prepared as described in Example 1 and results are provided in Table 1.

### Comparative Example 3

To further demonstrate the unexpected nature of the results obtained with the tie-layer adhesives of the invention which utilize ethylene-butene-1 base resins, Comparative Example 2 was repeated using a mixture of ethylene-hexene-1 LLDPE copolymers combined at a ratio so that the density and the MI of the mixture were approximately 0.918g/cm³ and 2 g/10 min, respectively - the same as the density and MI of the ethylene-butene-1 copolymer used for Example 1. The tie-layer adhesive composition contained 59.83 wt.% of the LLDPE mixture. All of the other components and amounts for this comparative blend were the same as used in Example 1. Adhesion results are reported in Table 1.

**Table 1**

| Adhesion Strength at Tie-Layer/Styrene Polymer Interface (lbs/ in) | | | |
|---|---|---|---|
| | Nearest chill roll | Away from chill roll | Average |
| Example 1 | 3.48 | 1.95 | 2.71 |
| Comparative Example 2 | 0.23 | 0.40 | 0.31 |
| Comparative Example 3 | 0.95 | 0.25 | 0.60 |

It is apparent from the data provided in Table 1 that adhesion obtained at the styrene polymer/tie-layer interface with the adhesive compositions of the invention which utilize an ethylene-butene-1 LLDPE resin with a SIS copolymer and MAH graft component are significantly higher than that of either of the comparative formulations which have an ethylene-hexene-1 LLDPE copolymer as the base resin. Furthermore, it should be mentioned that the remarkable improvement in adhesion at the styrenic polymer/tie-layer interface was accomplished without sacrificing adhesion at the barrier resin/tie-layer interface. Adhesion values obtained at the barrier resin/tie-layer interface using the adhesive blends of Example 1, Comparative Example 2 and Comparative Example 3 all ranged from about 0.8 to 1 lbs/in.

### Example 4 and Comparative Examples 5 and 6

To demonstrate the ability to include an elastomeric component in the adhesive blends of the invention and the improved results obtained therewith compared to adhesive blends obtained using LLDPEs outside the scope of the invention, Example 4 and Comparative Examples 5 and 6 are presented. Compositions of the adhesive blends as well as adhesion results at the styrenic polymer/tie-layer interface are set forth in Table 2. It should be noted that the LLDPE used for Example 4 was the same ethylene-butene-1 copolymer used for Example 1, the LLDPE used for Comparative Examples 5 was the same ethylene-hexene-1 copolymer used for Comparative Example 2 and the LLDPE used for Comparative Example 6 was the same mixture of ethylene-hexene-1 copolymers used for Comparative Example 3. The SIS component, MAH graft component and stabilizer were the same as previously used. The elastomer used was a commercially available ethylene-propylene-diene rubber (Mooney viscosity 20; 60 wt.% ethylene; 0.5 wt.% ethylidenenorbornene).

**Table 2**

| | Ex 4 | Comp. Ex 5 | Comp. Ex 6 |
|---|---|---|---|
| Adhesive Composition (wt.%): | | | |
| LLDPE | 49.83 | 49.83 | 49.83 |
| SIS | 30 | 30 | 30 |
| MAH graft | 10 | 10 | 10 |
| Elastomer | 10 | 10 | 10 |
| Stabilizer | 0.17 | 0.17 | 0.17 |
| Adhesion at styrenic polymer/tie layer interface (lbs/in). | | | |
| Side nearest chill roll | 3.65 | 0.95 | 1.56 |
| Side away from chill roll | 1.87 | 0.25 | 0.87 |
| Average | 2.76 | 0.60 | 1.22 |

The significant improvement in adhesion to the styrenic polymer layer obtained with the adhesive blends of the invention is readily apparent from the data. It should be noted that while the addition of elastomer to the comparative blends formulated using the ethylene-hexene-1 LLDPE base resin improves adhesion (see Comparative Example 5 vs. Comparative Example 2 and Comparative Example 6 vs. Comparative Example 3), the adhesion results are still significantly lower than achieved with adhesive blends of the invention formulated using ethylene-butene-1 LLDPE base resin..

### Comparative Example 7

An adhesive blend similar to that of Example 1 was prepared. The formulation was comprised of 64.83 wt.% LLDPE, 25 wt.% SIS triblock copolymer, 10 wt.% MAH graft and 0.17 wt.% stabilizer. All of the components used were the same as in Example 1 except that the SIS copolymer had a low styrene content (18 wt.%) and low MI (12 g/10 min). The SIS copolymer had less than 1 wt.% diblock. Adhesion at the styrenic polymer/tie-layer interface obtained with this comparative adhesive blend was only 0.04 lbs/in at the interface nearest the chill roll and 0.01 at the interface away from the chill roll - significantly lower than obtained with the blend of Example 1.

### Comparative Example 8

Using yet another SIS copolymer, one having a styrene content of 30 wt.% and MI of 13 g/10 min, an adhesive blend was prepared and evaluated in accordance with the procedure of Comparative Example 7. This SIS copolymer also contained less than 1 wt.% diblock. While adhesion values were somewhat improved over Comparative Example 7 (adhesion at the interface nearest the chill roll was 0.29 lbs/in and 0.23 lbs/in at the interface away from the chill roll), the results were still orders of magnitude less than obtained with the adhesive blend of Example 1 formulated using the high styrene content, high MI SIS copolymers.

## Claims

1. An adhesive composition comprising:
(a) 35 to 75 wt.%, based on the total weight of the composition, ethylene-butene-1 linear low density copolymer having density ASTM D 1505 from 0.912 to 0.925 g/cm³ and melt index ASTM D 1238 (condition 190/2.16) from 0.5 to 15 g/10 min;
(b) 15 to 45 wt.%, based on the total weight, styrene-isoprene-styrene triblock copolymer having a styrene content greater than 35 wt.%, melt flow rate ASTM D 1238 (condition 200/5) greater than 25 g/10 min and containing less than 1 wt.% diblock; and
(c) 1 to 25 wt.%, based on the total weight, polyethylene grafted with an ethylenically unsaturated carboxylic acid or acid derivative.

2. The adhesive composition of Claim 1 wherein the ethylene-butene-1 linear low density copolymer has a density from 0.915 to 0.92 g/cm³ and melt index from 0.5 to 5 g/10 min. and is present in an amount from 40 to 70 wt.%, based on the total weight.

3. The adhesive blend of Claim 2 wherein the ethylene-butene-1 linear low density copolymer has a density from 0.916 to 0.919 g/cm³ and is present in an amount from 45 to 65 wt.%, based on the total weight.

4. The adhesive composition of Claim 1 wherein the styrene-isoprene-styrene triblock copolymer has a styrene content greater than 40 wt.% and melt flow rate greater than 30 g/10 min and is present in an amount from 20 to 40 wt.%, based on the total weight.

5. The adhesive composition of Claim 4 wherein the styrene-isoprene-styrene triblock copolymer is present in an amount from 20 to 34.5 wt%, based on the total weight.

6. The adhesive composition of Claim 1 wherein the grafted polyethylene is an ethylene homopolymer or ethylene-C₄₋₈ α-olefin copolymer grafted with 0.5 to 5 wt.% maleic anhydride and is present in an amount from 2.5 to 20 wt.%, based on the total weight.

7. The adhesive composition of Claim 6 wherein the grafted polyethylene is a high density polyethylene resin having a density from 0.945 to 0.965 g/cm³ and is present in an amount from 5 to 17.5 wt.%, based on the total weight.

8. The adhesive composition of Claim 6 wherein the grafted polyethylene is a linear low density polyethylene resin having a density from 0.910 to 0.930 g/cm³ and is present in an amount from 5 to 17.5 wt%, based on the total weight.

9. The adhesive composition of Claim 1 additionally containing 1 to 20 wt%, based on the total weight, ethylene-propylene rubber or ethylene-propylene-diene rubber.

10. A multi-layer film or sheet comprising a styrene polymer layer and a tie-layer adhesively bonded thereto, said tie-layer comprising an adhesive composition comprising 35 to 75 wt.%, based on the total weight, ethylene-butene-1 linear low density copolymer; 15 to 45 wt.%, based on the total weight, styrene-isoprene-styrene triblock copolymer having a styrene content greater than 35 wt.%, melt flow rate ASTM D1238 (condition 200/5) greater than 25 g/10 min and containing less than 1 wt% diblock; 1 to 25 wt.%, based on the total weight, polyethylene grafted with an ethylenically unsaturated carboxylic acid or acid derivative; and, optionally, 1 to 20 wt.%, based on the total weight, ethylene-propylene elastomer.

11. The multi-layer film or sheet of Claim 10 wherein the styrene polymer is selected from the group consisting of polystyrene, high impact polystyrene and mixtures of polystyrene and high impact polystyrene.

12. The multi-layer film or sheet of Claim 11 wherein the ethylene-butene-1 linear low density copolymer has a density ASTM D1505 from 0.912 to 0.92 g/cm³ and melt index ASTM D1238 (condition 190/2.16) from 0.5 to 15 g/10 min; the styrene-isoprene-styrene triblock copolymer has a styrene content greater than 40 wt.% and melt flow rate greater than 30 g/10 min; and the grafted polyethylene is an ethylene homopolymer or ethylene-C₄₋₈ α-olefin copolymer grafted with 0.5 to 5 wt.% maleic anhydride.

13. The multi-layer film or sheet of Claim 12 wherein the ethylene-butene-1 linear low density copolymer constitutes 45 to 65 wt.% of the adhesive composition, the styrene-isoprene-styrene triblock copolymer constitutes 20 to 34.5 wt.% of the adhesive composition, the grafted polyethylene constitutes 5 to 17.5 wt.% of the adhesive composition, and the ethylene-propylene elastomer is present in an amount from 5 to 15 wt.%, based on the total weight, and is an ethylene-propylene rubber or ethylene-propylene-diene rubber.

14. The multi-layer film or sheet of Claim 11 further comprising a polyolefin layer and wherein said tie-layer is disposed between the polyolefin layer and the styrene polymer layer.

15. The multi-layer film or sheet of Claim 14 wherein the polyolefin layer is polyethylene.

## Patentansprüche

1. Klebemasse, umfassend:
(a) 35 bis 75 Gew.-%, bezogen auf das Gesamtgewicht der Masse, lineares Ethylen-Buten-1-Copolymer niederer Dichte mit einer Dichte nach ASTM D 1505 von 0,912 bis 0,925 g/cm³ und einem Schmelzindex nach ASTM D 1238 (Bedingung 190/2.16) von 0,5 bis 15 g/10 min;
(b) 15 bis 45 Gew.-%, bezogen auf das Gesamtgewicht, Styrol-Isopren-Styrol-Dreiblockcopolymer mit einem Styrolgehalt größer als 35 Gew.-%, einer Schmelzflussrate nach ASTM D 1238 (Bedingung 200/5) größer als 25 g/10 min und mit weniger als 1 Gew.-% Zweiblockcopolymer; und
(c) 1 bis 25 Gew.-%, bezogen auf das Gesamtgewicht, mit einer ethylenisch ungesättigten Carbonsäure oder einem Säurederivat gepfropftes Polyethylen.

2. Klebemasse nach Anspruch 1, worin das lineare Ethylen-Buten-1-Copolymer niederer Dichte eine Dichte von 0,915 bis 0,92 g/cm³ und einen Schmelzindex von 0,5 bis 5 g/10 min aufweist und in einer Menge von 40 bis 70 Gew.-%, bezogen auf das Gesamtgewicht, vorliegt.

3. Klebemischung nach Anspruch 2, worin das lineare Ethylen-Buten-1-Copolymer niederer Dichte eine Dichte von 0,916 bis 0,919 g/cm³ aufweist und in einer Menge von 45 bis 65 Gew.-%, bezogen auf das Gesamtgewicht, vorliegt.

4. Klebemasse nach Anspruch 1, worin das Styrol-Isopren-Styrol-Dreiblockcopolymer einen Styrolgehalt größer als 40 Gew.-% und eine Schmelzflussrate größer als 30 g/10 min aufweist und in einer Menge von 20 bis 40 Gew.-%, bezogen auf das Gesamtgewicht, vorliegt.

5. Klebemasse nach Anspruch 4, worin das Styrol-Isopren-Styrol-Dreiblockcopolymer in einer Menge von 20 bis 34,5 Gew.-%, bezogen auf das Gesamtgewicht, vorliegt.

6. Klebemasse nach Anspruch 1, worin das Pfropfpolyethylen ein Ethylen-Homopolymer oder mit 0,5 bis 5 -Gew.% Maleinsäureanhydrid gepfropftes Ethylen-C₄₋₈-α-Olefin-Copolymer ist und in einer Menge von 2,5 bis 20 Gew.-%, bezogen auf das Gesamtgewicht, vorliegt.

7. Klebemasse nach Anspruch 6, worin das Pfropfpolyethylen ein Polyethylenharz hoher Dichte ist, das eine Dichte von 0,945 to 0,965 g/cm³ aufweist und in einer Menge von 5 bis 17,5 Gew.-%, bezogen auf das Gesamtgewicht, vorliegt.

8. Klebemasse nach Anspruch 6, worin das Pfropfpolyethylen ein lineares Polyethylenharz niederer Dichte ist, das eine Dichte von 0,910 bis 0,930 g/cm³ aufweist und in einer Menge von 5 bis 17,5 Gew.-%, bezogen auf das Gesamtgewicht, vorliegt.

9. Klebemasse nach Anspruch 1, zusätzlich enthaltend 1 bis 20 Gew.-%, bezogen auf das Gesamtgewicht, Ethylen-Propylen-Kautschuk oder Ethylen-Propylen-Dien-Kautschuk.

10. Mehrschichtfeinfolie oder -grobfolie, umfassend eine Styrol-Polymer-Schicht und eine daran verklebte Haftvermittlerschicht, wobei die Haftvermittlerschicht aus einer Klebemasse besteht, die 35 bis 75 Gew.-%, bezogen auf das Gesamtgewicht, lineares Ethylen-Buten-1-Copolymer niederer Dichte; 15 bis 45 Gew.-%, bezogen auf das Gesamtgewicht, Styrol-Isopren-Styrol-Dreiblockcopolymer mit einem Styrolgehalt größer als 35 Gew.-%, einer Schmelzflussrate nach ASTM D1238 (Bedingung 200/5) größer als 25 g/10 min und mit weniger als 1 Gew.-% Zweiblockcopolymer; 1 bis 25 Gew.-%, bezogen auf das Gesamtgewicht, mit einer ethylenisch ungesättigten Carbonsäure oder einem Säurederivat gepfropftes Polyethylen; und gegebenenfalls 1 bis 20 Gew.-%, bezogen auf das Gesamtgewicht, Ethylen-Propylen-Elastomer enthält.

11. Mehrschichtfeinfolie oder -grobfolie nach Anspruch 10, worin das Styrol-Polymer aus der aus Polystyrol, hochschlagzähem Polystyrol und Gemischen aus Polystyrol und hochschlagzähem Polystyrol bestehenden Gruppe ausgewählt ist.

12. Mehrschichtfeinfolie oder -grobfolie nach Anspruch 11, worin das lineare Ethylen-Buten-1-Copolymer niederer Dichte eine Dichte nach ASTM D1505 von 0,912 bis 0,92 g/cm³ und einen Schmelzindex nach ASTM D1238 (Bedingung 190/2.16) von 0,5 bis 15 g/10 min aufweist; das Styrol-Isopren-Styrol-Dreiblockcopolymer einen Styrolgehalt größer als 40 Gew.-% und eine Schmelzflussrate größer als 30 g/10 min aufweist; und das Pfropfpolyethylen ein Ethylen-Homopolymer oder ein mit 0,5 bis 5 Gew.-% Maleinsäureanhydrid gepfropftes Ethylen-C₄₋₈-α-Olefin-Copolymer ist.

13. Mehrschichtfeinfolie oder -grobfolie nach Anspruch 12, worin das lineare Ethylen-Buten-1-Copolymer niederer Dichte 45 bis 65 -Gew.-%, das Styrol-Isopren-Styrol-Dreiblockcopolymer 20 bis 34,5 Gew.-% und das Pfropfpolyethylen 5 bis 17,5 Gew.-% der Klebemasse ausmacht, und das Ethylen-Propylen-Elastomer in einer Menge von 5 bis 15 Gew.-%, bezogen auf das Gesamtgewicht, enthalten ist und ein Ethylen-Propylen-Kautschuk oder Ethylen-Propylen-Dien-Kautschuk ist.

14. Mehrschichtfeinfolie oder -grobfolie nach Anspruch 11, ferner umfassend eine Polyolefinschicht und worin die Haftvermittlerschicht zwischen der Polyolefinschicht und der Styrol-Polymer-Schicht abgelagert ist.

15. Mehrschichtfeinfolie oder -grobfolie nach Anspruch 14, worin die Polyolefinschicht Polyethylen ist.

## Revendications

1. Composition adhésive comprenant :
(a) 35 à 75% en poids, sur base du poids total de la composition, d'un copolymère d'éthylène/butène-1 linéaire de basse densité présentant une densité selon la norme ASTM D 1505 de 0,912 à 0,925 g/cm³ et un indice de fluidité à chaud selon la norme ASTM D 1238 (condition 190/2,16) de 0,5 à 15 g/10 min ;
(b) 15 à 45% en poids, sur base du poids total, d'un copolymère de styrène-isoprène-styrène à trois blocs présentant une teneur en styrène supérieure à 35% en poids, un indice de fluidité à chaud selon la norme ASTM D 1238 (condition 200/5) supérieur à 25 g/10 min et contenant moins de 1% en poids de copolymère à deux blocs ; et
(c) 1 à 25% en poids, sur base du poids total, de polyéthylène greffé avec un acide ou un dérivé d'acide carboxylique éthyléniquement insaturé.

2. Composition adhésive selon la revendication 1, où le copolymère d'éthylène/butène-1 linéaire de basse densité présente une densité de 0,915 à 0,92 g/cm³ et un indice de fluidité à chaud de 0,5 à 5 g/10 min. et est présent en une quantité de 40 à 70% en poids, sur base du poids total.

3. Composition adhésive selon la revendication 2, où le copolymère d'éthylène/butène-1 linéaire de basse densité présente une densité de 0,916 à 0,919 g/cm³ et est présent en une quantité de 45 à 65% en poids, sur base du poids total.

4. Composition adhésive selon la revendication 1, où le copolymère de styrène-isoprène-styrène à trois blocs présente une teneur en styrène supérieure à 40% en poids et un indice de fluidité à chaud supérieur à 30 g/10 min et est présent en une quantité de 20 à 40% en poids, sur base du poids total.

5. Composition adhésive selon la revendication 4, où le copolymère de styrène-isoprène-styrène à trois blocs est présent une quantité de 20 à 34,5% en poids, sur base du poids total.

6. Composition adhésive selon la revendication 1, où le polyéthylène greffé est un homopolymère d'éthylène ou un copolymère d'éthylène-C₄₋₈-α-oléfine greffé avec 0,5 à 5% en poids d'anhydride maléique et est présent en une quantité de 2,5 à 20% en poids, sur base du poids total.

7. Composition adhésive selon la revendication 6, où le polyéthylène greffé est une résine de polyéthylène de haute densité présentant une densité de 0,945 à 0,965 g/cm³ et est présent en une quantité de 5 à 17,5% en poids, sur base du poids total.

8. Composition adhésive selon la revendication 6, où le polyéthylène greffé est une résine de polyéthylène linéaire de basse densité présentant une densité de 0,910 à 0,930 g/cm³ et est présent en une quantité de 5 à 17,5% en poids, sur base du poids total.

9. Composition adhésive selon la revendication 1, contenant, de plus, 1 à 20% en poids, sur base du poids total, d'un caoutchouc d'éthylène-propylène ou d'un caoutchouc d'éthylène-propylène-diène.

10. Film ou feuille multicouche comprenant une couche en polymère de styrène et une couche de liaison liée de manière adhésive à celle-ci, ladite couche de liaison comprenant une composition adhésive comprenant 35 à 75% en poids, sur base du poids total, de copolymère d'éthylène-butène-1 linéaire de basse densité ; 15 à 45% en poids, sur base du poids total, de copolymère de styrène-isoprène-styrène à trois blocs présentant une teneur en styrène supérieure à 35% en poids, un indice de fluidité à chaud selon la norme ASTM D1238 (condition 200/5) supérieur à 25 g/10 min et contenant moins de 1% en poids de copolymère à deux blocs ; 1 à 25% en poids, sur base du poids total, de polyéthylène greffé avec un acide ou un dérivé d'acide carboxylique éthyléniquement insaturé ; et, éventuellement, 1 à 20% en poids, sur base du poids total, d'élastomère d'éthylène-propylène.

11. Film ou feuille multicouche selon la revendication 10, où le polymère de styrène est choisi dans le groupe constitué par le polystyrène, le polystyrène à haute résistance et des mélanges de polystyrène et de polystyrène à haute résistance.

12. Film ou feuille multicouche selon la revendication 11, où le copolymère d'éthylène-butène-1 linéaire de basse densité présente une densité selon la norme ASTM 01505 de 0,912 à 0,92 g/cm³ et un indice de fluidité à chaud selon la norme ASTM 01238 (condition 190/2,16) de 0,5 à 15 g/10 min ; le copolymère de styrène-isoprène-styrène à trois blocs présente une teneur en styrène supérieure à 40% en poids et un indice de fluidité à chaud supérieur à 30 g/10 min ; et le polyéthylène greffé est un homopolymère d'éthylène ou un copolymère d'éthylène-C₄₋₈-α-oléfine greffé avec de 0,5 à 5% en poids d'anhydride maléique.

13. Film ou feuille multicouche selon la revendication 12, où le copolymère d'éthylène-butène-1 linéaire de basse densité constitue 45 à 65 en poids de la composition adhésive, le copolymère de styrène-isoprène-styrène à trois blocs constitue 20 à 34,5% en poids de la composition adhésive, le polyéthylène greffé constitue 5 à 17,5% en poids de la composition adhésive, et l'élastomère d'éthylène-propylène est présent en une quantité de 5 à 15% en poids, sur base du poids total, et est un caoutchouc d'éthylène-propylène ou un caoutchouc d'éthylène-propylène-diène.

14. Film ou feuille multicouche selon la revendication 11, comprenant, de plus, une couche de polyoléfine et où ladite couche de liaison est disposée entre la couche de polyoléfine et la couche de polymère de styrène.

15. Film ou feuille multicouche selon la revendication 14, où la couche de polyoléfine est en polyéthylène.
